Europäisches Patentamt

European Patent Office

Office européen des brevets

(19)

(11) Publication number: **0 087 482**
**B1**

(12) **EUROPEAN PATENT SPECIFICATION**

(45) Date of publication of patent specification: **25.06.86**

(51) Int. Cl.⁴: **C 22 C 38/40,** C 03 B 13/16

(21) Application number: **82101505.4**

(22) Date of filing: **26.02.82**

(54) Heat-resisting alloy for rolls.

(43) Date of publication of application:
**07.09.83 Bulletin 83/36**

(45) Publication of the grant of the patent:
**25.06.86 Bulletin 86/26**

(84) Designated Contracting States:
**BE DE FR GB IT SE**

(56) References cited:
**FR-A-1 184 085**
**FR-A-2 296 022**
**GB-A- 730 272**
**GB-A-1 049 864**
**GB-A-1 221 546**
**GB-A-1 241 291**
**US-A-2 537 477**
**US-A-3 251 683**

**HANDBUCH DER SONDERSTAHLKUNDE,
1956, Zahlentafel 151, pages 768-770**

(73) Proprietor: **KUBOTA LTD.**
**2-47, Shikitsuhigashi 1-chome**
**Naniwa-ku Osaka 556 (JP)**

(72) Inventor: **Yamakami, Yoshiaki**
**9-21, Honmachi 3-chome**
**Toyonaka-shi Osaka (JP)**
Inventor: **Yoshimitsu, Arata**
**3-13, Amanogaharacho 3-chome**
**Katano-shi Osaka (JP)**

(74) Representative: **Patentanwälte TER MEER -
MÜLLER - STEINMEISTER
Mauerkircherstrasse 45
D-8000 München 80 (DE)**

Courier Press, Leamington Spa, England.

# 0 087 482

**Description**

Background of the invention

The present invention relates to the use of a heat-resisting alloy as the material for rolls having a high . resistance to heat cracking under repeated heating and cooling conditions used in continuous casting or glass forming.

Plate-like glasses are manufactured by means of a glass forming rolling machine by having molten glass pass the roll continuously. However, the surface of the roll is heated to approximately 700°C by the contact with the molten glass of high temperature and is subject to oxidation. The surface of roll is cooled by passing water through the hollow interior of the roll to prevent high temperature oxidation, however, the portion not in contact with the molten glass is cooled with air. Since the roll of a glass forming machine is thus subject to heat impact by heating and cooling, heat cracks are apt to be generated on the roll surface in short time of operation, which obliges the replacement of the roll.

The roll surface of rolls for continuous casting, contacts with slabs of high temperature and is subject to high temperature oxidation. Heat cracks are also found on the surface of the roll in a short period of operation due to repeated heating and cooling.

Since rolls working at high temperature have basically same problems, theretofore, hereafter, a glass forming rolls will be described in detail.

In view of their resistance to oxidation and to heat cracks, Cr-Mo steels containing 0.10 to 0.15% (by weight, the same as hereinafter) of C, 1.0 to 2.0% of Cr, 0.10 to 1.5% of Mo, or Ni-Cr steel containing 0.10 to 0.15% of C, 1.0 to 2.0% of Ni, 0.10 to 1.0% of Cr, or ductile cast iron or the like have been used as the material for rolls used for glass forming. These materials are not sufficient to prevent generation of a rough surface and heat cracks on the circumferential face of rolls. Such rough surface or heat cracks generated on the roll surface are transferred to the glass surface in the course of glass forming process, and thus a glass having a fine surface cannot be produced with such forming rolls.

GB—A—1 049 864 describes a corrosion resistant martensitic steel casting having a combination of good corrosion resistance with good weldability and mechanical properties. There is, however, no reference in this document, that these alloys may have a high resistance to heat cracking under repeated heating and cooling conditions and could be used for the manufacture of rolls used in continuous casting or glass forming.

"Handbuch der Sonderstahlkunde", 1956 Vol. 1, table 151 and pages 768 to 770 discloses the alloy X10CrSi13 comprising 0.20% C, 0.5% Si, 0.5% Mn, 14.0% Cr, 0.5% Ni, the balance Fe, which may be forged to provide tubes. Furtheron a perlitic-martensitic steel X42 CrSi 17 is described and it is stated that this high strength alloy can be used for parts which must have high mechanical stabilities used in dairies, the yeast starch and paper industry, for pump parts and for valves.

Summary of the invention

It has now been found that alloys having a specific and defined composition have a surprising high resistance to heat cracking under repeated heating and cooling conditions and therefore are very well suited for the manufacture of rolls used in continuous casting or glass forming.

The subject matter of the present invention therefore is the use of a heat-resisting alloy comprising in terms of % by weight:

| | |
|---|---|
| C | 0.01—0.20 |
| Si | 0.10—1.5 |
| Mn | 0.10—2.0 |
| Ni | 0.10—6.0 |
| Cr | 14.0—18.0 |

and the balance Fe and inevitable impurities, as the material for rolls having a high resistance to heat cracking under repeated heating and cooling conditions used in continuous casting or glass forming.

A further object of the present invention comprises the use of the above alloy comprising 0.05 to 0.15% by weight of C.

According to a further embodiment the present invention relates to the use of a heat-resisting alloy comprising in terms of % by weight:

| | |
|---|---|
| C | 0.01—0.20 |
| Si | 0.10—1.5 |
| Mn | 0.10—2.0 |
| Ni | 0.10—6.0 |
| Cr | 14.0—18.0 |

and further containing at least one of the elements:

| | |
|---|---|
| Mo | 0.1—2.0 |
| Nb | 0.05—0.5 |
| V | 0.10—0.5 |
| Co | 0.10—5.0 |

and in the case of containing Co

$$Ni+Co \leq 7.0$$

and the balance Fe and inevitable impurities as the material for rolls having a high resistance to heat cracking under repeated heating and cooling conditions used in continuous casting or glass forming.

Furtheron the alloy used according to the above second embodiment of the inventions may comprise 0.05 to 0.15% by weight of C.

Brief description of the drawings

Figure 1 is a front elevation view of the test piece applied for the yield strength test, the tension test and the elongation test applied to the alloy used according to this invention.

Figure 2 is a perspective view of the test piece applied for the impact test.

Detailed description of the invention

The components of the heat-resisting alloy used and the proportions of the components will be described in detail.

In the description to follow, the percentages are all by weight.

The content of C should be as low as possible from the viewpoint of toughness, but it is practically difficult to limit lower than 0.01% in ordinary melting. On the other hand, the C content higher than 0.20% reduces toughness enormously. Thus the proper range of C is determined to 0.01 to 0.20%. Higher content of C, however, increases tensile strength of the alloy. Therefore, under conditions in which satisfactory tensile strength and sufficient resistance to heat crack are required, range of the C content is preferred to 0.05 to 0.15%.

Si serves as a deoxidant and is unavoidably contained about 0.10%. However, Si content must be up to 1.5% or lower since an excess of Si leads to reduced toughness resulting in occurrence of crack. Thus the range of Si is 0.10 to 1.5%.

Mn functions also a deoxidant like Si and contributes to strengthening matrix. At least 0.10% of Mn is required for this purpose, but the upper limit of Mn is 2.0% since use of excess amounts of Mn does not bring about corresponding effect and leads to reduced toughness. Thus the range of Mn is 0.10 to 2.0%.

Ni improves resistance to heat crack. At least 0.1% of Ni is used for this purpose, but the upper limit of Ni is 6.0% because use of larger amounts of Ni lowers Al transformation point and leads to impaired resistance to heat crack. Thus the range of Ni is 0.10 to 6.0%.

Cr is effective for preventing formation of coarse face and generation of heat cracks. At least 14.0% of Cr is required for this purpose. However, since the presence of an excess of Cr results in impaired resistance to heat crack, the upper limit of the Cr content is 18.0%. Thus the range of Cr is 14.0 to 18.0%.

Mo contributes to the enhancement of strength at high temperature and to the improvement of resistance to heat crack. At least 0.10% of Mo is used for this purpose. But, its effect is saturated at the content higher than 2.0%. It is not economical to use the expensive Mo excessively. Thus the range of Mo is 0.10 to 2.0%.

Nb and V contribute such as Mo to the improvement of high temperature strength and resistance to heat crack. To achieve these effects sufficiently, it is desired that the Nb content is at least 0.05% and the V content is at least 0.10%. However, excessive use of Nb and V more than 0.5% reduces toughness. Accordingly, the upper limit of Nb and V is preferably 0.5%. Thus the range of Nb is 0.05 to 0.5% and that of V is 0.10 to 0.5%.

Co also contributes to the improvement of high temperature strength and resistance to heat crack, and achieves improvement in toughness at high temperature owing to maintaining a drop of Ms point slightly. For this purpose it is desirable to use at least 0.10% of Co. On the other hand, use of a large amount of Co more than 5.0% does not result in corresponding effects and increases thermal expansion. Also, it is not economical to use the expensive element excessively. Accordingly, the upper limit of the Co content is preferably 5.0%. Thus the range of Co is 0.10 to 5.0%.

While both Ni and Co are important elements for improving resistance to heat crack, heat cracks are likely to occur when the contents of Ni and Co exceed 7.0% in total. Thus the range of Ni and Co is preferably up to 7.0% or lower in total.

Each chemical component of the alloy used in this invention acts not only by its individual effect but also by its mutual additional effect to increase resistance to oxidation and to heat crack of the heat-resisting alloy.

Characteristic features of the alloy used according to this invention will be described in detail with reference to examples.

Alloys of various compositions were prepared in an induction melting furnace and made by casting into tubes having a dimension of 160 mm in outside diameter, 28 mm in wall thickness and 220 mm in length. Table 1 shows the chemical compositions of the specimens thus obtained.

Test pieces were prepared from the alloy specimens and tested for heat crack and mechanical properties by the following methods.

Test 1: Heat crack test

The test piece measuring 150 mm in outside diameter, 23 mm in wall thickness and 70 mm in length was presented for heat crack test. The outer surface of the test. The outer surface of the test piece was heated by an induction heating machine (100 KHz), and heating is stopped when the surface temperature reaches 700°C, then the heated surface was cooled in water for 30 seconds. This cycle of heating and cooling in water was repeated until a heat crack was found on the surface of the test piece. Result of the heat crack test is expressed in terms of the number of repetitions.

Result of the test is shown in table 2.

Test 2: Test for mechanical properties

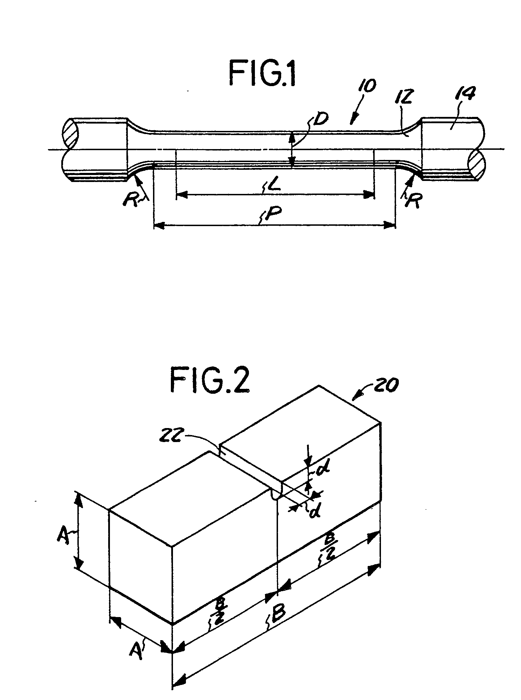

Referring to Figure 1, the test piece 10 was used for the test of 0.2% yield strength, tensile strength and elongation. The test piece 10 comprises a parallel portion L having a circular cross section. The parallel portion L has a fillet 12 measuring R in radius at both ends, and further gripped portions 14, 14 are respectively provided at the terminations of the fillets 12, 12. Each letter in Figure 1 designates following dimension, in which the letter L means a gauge distance.

$$L \ldots 50 \text{ mm} \qquad P \ldots 60 \text{ mm}$$

$$D \ldots 14 \text{ mm} \qquad R \ldots 15 \text{ mm}$$

By the way, the 0.2% yield strength indicates a stress when 0.2% of permanent elongation occurs in a tension test.

With respect to impact test, it was tested by Charpy Impact Tester with the test piece 20 as shown in Figure 2. The test piece 20 has a notch portion 22 in which the bottom portion of the groove is formed in 1 mm of radius shape. The test piece 20 was struck from the opposite direction of the notch portion 22. Each letter in Figure 2 shows as follows:

$$A \ldots 10 \text{ mm} \qquad B \ldots 55 \text{ mm}$$

$$d \ldots 2 \text{ mm}$$

The test results of aforementioned mechanical properties are shown in Table 3.

4

# 0 087 482

TABLE 1

|  | No | C | Si | Mn | Ni | Cr | Mo | Nb | V | Co | Ni+Co |
|---|---|---|---|---|---|---|---|---|---|---|---|
| Conventional alloy | 1 | 0.12 | 0.50 | 0.87 | 1.72 | 0.39 | — | — | — | — | — |
|  | 2 | 0.14 | 0.49 | 0.90 | — | 2.28 | 0.96 | — | — | — | — |
|  | 3 | 3.00 | 2.15 | 0.95 | — | — | — | — | — | — | — |
| Alloy used in the invention | 4 | 0.12 | 0.29 | 0.91 | 1.21 | 15.10 | — | — | — | — | — |
|  | 5 | 0.10 | 0.39 | 0.91 | 2.93 | 16.27 | — | — | — | — | — |
|  | 6 | 0.09 | 0.32 | 0.90 | 1.21 | 16.15 | 1.05 | — | — | — | — |
|  | 7 | 0.07 | 0.42 | 0.98 | 2.41 | 16.64 | 1.17 | 0.30 | 0.41 | — | — |
|  | 8 | 0.07 | 0.40 | 0.93 | 2.37 | 16.77 | 0.75 | 0.40 | 0.25 | 3.38 | 5.75 |
| Comparative alloy | 9 | 0.12 | 0.40 | 0.82 | — | 12.99 | — | — | — | — | — |
|  | 10 | 0.07 | 0.60 | 1.14 | 8.15 | 18.00 | — | — | — | — | — |
|  | 11 | 0.10 | 0.45 | 1.05 | 4.66 | 16.36 | 0.83 | 0.15 | 0.15 | 4.14 | 8.80 |

(Balance substantially Fe)
Note: The mark (—) means that specific element is not contained particularly.

TABLE 2

|  | No. | Number of repetition |
|---|---|---|
| Conventional alloy | 1 | 200 |
|  | 2 | 290 |
|  | 3 | 25 |
| Alloy used in the invention | 4 | 1000 |
|  | 5 | 950 |
|  | 6 | 1050 |
|  | 7 | 1000 |
|  | 8 | 1200 |
| Comparative alloy | 9 | 800* |
|  | 10 | 300 |
|  | 11 | 700 |

Note(*): It was difficult to identify the generation of crack due to oxidation at the outer surface.

5

TABLE 3

| | No. | 0.2% Yield strength ($10^8$Pa) | Tensile strength ($10^8$Pa) | Elongation (%) | Impact value (joule) |
|---|---|---|---|---|---|
| Conventional alloy | 1 | 3.25 | 6.42 | 39.5 | 94.18 |
| | 2 | 4.38 | 6.71 | 24.3 | 122.43 |
| | 3 | 2.84 | 4.17 | 18.6 | 11.77 |
| Alloy of the invention | 4 | 6.20 | 7.88 | 23.6 | 110.66 |
| | 5 | 6.57 | 8.84 | 18.0 | 98.10 |
| | 6 | 6.21 | 7.92 | 23.5 | 112.23 |
| | 7 | 7.08 | 8.83 | 21.1 | 83.19 |
| | 8 | 7.49 | 9.46 | 23.3 | 65.92 |
| Comparative alloy | 9 | 5.24 | 6.89 | 25.3 | 80.05 |
| | 10 | 2.53 | 5.74 | 60.2 | 117.72 |
| | 11 | 7.55 | 9.96 | 20.9 | 66.71 |

Results of the test:

The above table 2 reveals that the heat-resisting alloys used according to the invention retard the occurrence of heat cracks and have a resistance to heat cracking superior by a factor or of more than 3 in comparison to the conventional alloys. The comparative alloys are, similar to the conventional alloys, inferior to the alloys used according to the invention with respect to heat-cracking.

Among these specimens listed in table 2, speciment no. 9 is superior to the conventional alloys in resistance to heat-cracking, it is, however, inferior with respect to the oxidation-resistance.

Referring to table 3, the alloys used according to the invention have an exceedingly higher yield strength and tensile strengths than the conventional alloys, and further have satisfactory properties in elongation and impact value in comparison with the conventional Ni-Cr steel or Cr-Mo steel in spite of such high strength.

The alloy used according to the invention is therefore well suited as a material not only for glass forming rolls but also for rolls for continuous casting, such as support rolls, guide rolls, pinch rolls and so on, which are specifically used under the conditions of repeated heating and cooling.

When a low grade material, such as a conventional 13Cr steel is used as the base material for the roll, weld padding on the circumference of the roll may be applied using the alloys applied for the present invention.

Since the heat-resisting alloy used according to the invention has a high resistance to oxidation and to heat-cracking even under conditions comprising repeated heating and cooling and which is condition excellent in its mechanical properties, such as tensile strength, impact value or the like, this alloy is suited to provide the material for rolls having a high resistance to heat cracking under repeating heating and cooling conditions used in continuous casting or glass forming.

**Claims**

1. The use of a heat-resisting alloy comprising in terms of % by weight:

| | |
|---|---|
| C | 0.01—0.20 |
| Si | 0.10—1.5 |
| Mn | 0.10—2.0 |
| Ni | 0.10—6.0 |
| Cr | 14.0—18.0 |

6

and the balance Fe and inevitable impurities, as the material for rolls having a high resistance to heat cracking under repeated heating and cooling conditions used in continuous casting or glass forming.

2. The use according to claim 1, characterized in that the alloy comprises 0.05 to 0.15% by weight of C.

3. The use of a heat-resisting alloy comprising in terms of % by weight:

| C | 0.01—0.20 |
| Si | 0.10—1.5 |
| Mn | 0.10—2.0 |
| Ni | 0.10—6.0 |
| Cr | 14.0—18.0 |

and further containing at least one of the elements:

| Mo | 0.1—2.0 |
| Nb | 0.05—0.5 |
| V | 0.10—0.5 |
| Co | 0.10—5.0 |

and in the case of containing Co

$$Ni+Co \leq 7.0$$

and the balance Fe and inevitable impurities as the material for rolls having a high resistance to heat cracking under repeated heating and cooling conditions used in continuous casting or glass forming.

4. The use according to claim 3, characterized in that the alloy comprises 0.05—0.15% by weight of C.

**Patentansprüche**

1. Verwendung einer hitzebeständigen Legierung, die

0,01 bis 0,20 Gew.-% C,
0,10 bis 1,5 Gew.-% Si,
0,10 bis 2,0 Gew.-% Mn,
0,10 bis 6,0 Gew.-% Ni,
14,0 bis 18,0 Gew.-% Cr

und Rest Eisen und unvermeidbare Verunreinigungen enthält, als Material für Walzen mit hoher Warmrißbeständigkeit bei wiederholten Bedingungen des Aufheizens und Abkühlens für den Strangguß oder das Formen von Glas.

2. Verwendung nach Anspruch 1, dadurch gekennzeichnet, daß die Legierung 0,05 bis 0,15 Gew.-% C enthält.

3. Verwendung einer hitzebeständigen Legierung, die

0,01 bis 0,20 Gew.-% C,
0,10 bis 1,5 Gew.-% Si,
0,10 bis 2,0 Gew.-% Mn,
0,10 bis 6,0 Gew.-% Ni,
14,0 bis 18,0 Gew.-% Cr

und zusätzlich mindestens eines der Elemente

0,1 bis 2,0 Gew.-% Mo,
0,05 bis 0,5 Gew.-% Nb,
0,10 bis 0,5 Gew.-% V,
0,10 bis 5,0 Gew.-% Co,

Rest Fe und unvermeidbare Verunreinigungen enthält und im Fall des Gehalts an Co folgende Bedingung erfüllt

$$Ni+Co \leq 7,0,$$

7

**0 087 482**

als Material für Walzen mit hoher Warmrißbeständigkeit bei wiederholten Bedingungen des Aufheizens und Abkühlens für den Strangguß oder das Formen von Glas.

4. Verwendung nach Anspruch 3, dadurch gekennzeichnet, daß die Legierung 0,05 bis 0,15 Gew.-% C enthält.

**Revendications**

1. L'utilisation d'un alliage réfractaire comprenant en pourcentage en poids:

|     |          |
|-----|----------|
| C   | 0,01—0,20 |
| Si  | 0,10—1,5  |
| Mn  | 0,10—2,0  |
| Ni  | 0,10—6,0  |
| Cr  | 14,0—18,0 |

ainsi que le complément Fe et les impuretés inévitables, comme matériau pour des rouleaux présentant une résistance élevée au fissurage d'origine thermique en présence de conditions de chauffage et de refroidissement répétées qui existent dans la coulée continue ou le façonnage du verre.

2. L'utilisation selon la revendication 1, caractérisée en ce que l'alliage comprend 0,05 à 0,15% en poids de C.

3. L'utilisation d'un alliage réfractaire comprenant en pourcentage en poids:

|     |          |
|-----|----------|
| C   | 0,01—0,20 |
| Si  | 0,10—1,5  |
| Mn  | 0,10—2,0  |
| Ni  | 0,10—6,0  |
| Cr  | 14,0—18,0 |

et contenant en outre au moins un des éléments:

|     |          |
|-----|----------|
| Mo  | 0,1—2,0   |
| Mb  | 0,05—0,5  |
| V   | 0,10—0,5  |
| Co  | 0,10—5,0  |

et dans le cas où il contient Co

$$Ni+Co \leqslant 7,0$$

et le complément Fe et les impuretés inévitables, comme matériau pour rouleaux présentant une résistance élevée au fissurage d'origine thermique en présence de conditions de chauffage et de refroidissement répétées qui existent dans la coulée continue ou le façonnage du verre.

4. L'utilisation selon la revendication 3, caractérisée en ce que l'alliage comprend 0,05—0,15% en poids de C.

8

# FIG.1

# FIG.2